# EUROPEAN PATENT SPECIFICATION

(11) **EP 3 419 149 B1**
(45) Date of publication and mention of the grant of the patent: **08.04.2020**
(21) Application number: 17753196.9
(22) Date of filing: 15.02.2017
(51) Int. Cl.: H02K 11/21, B60K 7/00, F16H 3/48, F16H 3/72, H02K 7/116

(54) **ELECTRIC VEHICLE DRIVE DEVICE**
ELEKTROFAHRZEUGANTRIEBSVORRICHTUNG
DISPOSITIF D'ENTRAÎNEMENT DE VÉHICULE ÉLECTRIQUE

(30) Priority: 18.02.2016 JP 2016028943
(43) Date of publication of application: 26.12.2018
(73) Proprietor: NSK Ltd., Tokyo 141-8560 (JP)
(72) Inventor: YAMAMOTO, Shin, Fujisawa-shi Kanagawa 251-8501 (JP); MATSUDA, Yasuyuki, Fujisawa-shi Kanagawa 251-8501 (JP)
(74) Representative: Grünecker Patent- und Rechtsanwälte PartG mbB
(86) International application number: PCT/JP2017/005436
(87) International publication number: WO 2017/141940

(56) References cited:
- WO-A1-2011/145726
- WO-A1-2011/145726
- JP-A- 2013 044 424
- JP-A- 2013 044 424
- JP-A- 2015 020 449
- JP-A- 2015 020 449

## Description

### TECHNICAL FIELD

The present invention relates to an electric vehicle drive device according to the preamble of claim 1. Such an electric vehicle drive device is known from WO 2011/145726 A1.

### RELATED ART

An electric vehicle such as an electric-powered car is mounted therein with a drive device that is to be driven by electric power of a battery. Among the drive devices, a drive device configured to directly drive a wheel is referred to as an in-wheel motor. As a drive type of the in-wheel motor, a gear reduction type including a deceleration mechanism and a direct drive type not including the deceleration mechanism may be exemplified. In the in-wheel motor of the gear reduction type, it is easy to output torque that is necessary when starting the electric vehicle or going up an uphill road. However, friction loss is generated in the deceleration mechanism. On the other hand, in the in-wheel motor of the direct drive type, the friction loss is prevented but the outputtable torque is relatively small. For this reason, for example, Patent Document 1 discloses an in-wheel motor including a transmission mechanism.

### Citation List

### Patent Documents

Patent Document 1: JP-A-2013-044424

### SUMMARY OF THE INVENTION

### Problems To Be Solved By the Invention

The in-wheel motor disclosed in Patent Document 1 includes two motors and two planetary gear mechanisms. For this reason, since the structure is likely to be complicatedly large, the arrangement of signal lines of a rotation angle detector configured to detect rotation angles of the motors is likely to be complex. Thereby, there is a possibility that a noise will increase in an output of the rotation angle detector. Therefore, there is a need for an electric vehicle drive device having a transmission mechanism and capable of reducing the noise to occur in the output of the rotation angle detector.

The present invention has been made in view of the above situations, and an object thereof is to provide an electric vehicle drive device having a transmission mechanism and capable of reducing a noise to occur in an output of a rotation angle detector.

### Means for Solving the Problems

In order to achieve the above object, an electric vehicle drive device of the present invention includes a tube-shaped case having a partition wall provided to an inside thereof, a first motor including a first rotor core capable of rotating about a rotation axis and a first member to be detected configured to rotate together with the first rotor core, a first rotation angle detector coupled to the partition wall and facing the first member to be detected, a first signal line connected to the first rotation angle detector, a second motor including a second rotor core capable of rotating about the rotation axis and a second member to be detected configured to rotate together with the second rotor core and arranged at an opposite side to the first motor with the partition wall being interposed therebetween, a second rotation angle detector coupled to the partition wall and facing the second member to be detected, a second signal line connected to the second rotation angle detector, and a transmission mechanism coupled to the first motor and the second motor and capable of switching a deceleration ratio, wherein when seen from a direction of the rotation axis, a first line passing a root of the first signal line on the first rotation angle detector-side and the rotation axis is overlapped with a second line passing a root of the second signal line on the second rotation angle detector-side and the rotation axis.

Thereby, since the first rotation angle detector is fixed to one side of the partition wall and the second rotation angle detector is fixed to the other side of the partition wall, a distance from the first rotation angle detector to the second rotation angle detector is likely to be shortened. Further, since the first signal line and the second signal line are taken out in the same direction, lengths of the first signal line and the second signal line are likely to be shortened. For this reason, the noise that is to occur in outputs of the first signal line and the second signal line is reduced. Accordingly, the electric vehicle drive device has the transmission mechanism and can reduce the noise to occur in the output of the rotation angle detector.

As a preferred aspect of the present invention, a position of the second rotation angle detector is preferably offset in a circumferential direction of the first motor with respect to a position of the first rotation angle detector.

Thereby, even when the first rotation angle detector and the second rotation angle detector are the same device, a position of a fastening member for fixing the second rotation angle detector to the partition wall is offset with respect to a position of a fastening member for fixing the first rotation angle detector to the partition wall. For this reason, it is possible to easily fix the first rotation angle detector and the second rotation angle detector to the partition wall. Also, since the same device can be used for the first rotation angle detector and the second rotation angle detector, it is possible to save the cost upon the mass production.

As a preferred aspect of the present invention, preferably, the transmission mechanism includes a sun gear shaft coupled to the first motor, a first sun gear configured to rotate together with the sun gear shaft, a first pinion gear to mesh with the first sun gear, a first carrier configured to hold the first pinion gear so that the first pinion gear can rotate on its own axis and the first pinion gear can revolve around the first sun gear, and a clutch device capable of restraining rotation of the first carrier, the clutch device includes an inner ring coupled to the first carrier, an outer ring coupled to the partition wall, and a plurality of flange parts protruding from the outer ring in a radial direction of the first motor and facing the partition wall, the plurality of flange parts is unevenly arranged at a part, which is a circumferential part of the first motor, between one circumferential end and the other circumferential end, and at least one of the first rotation angle detector and the second rotation angle detector is arranged between the flange part of the one circumferential end and the flange part of the other circumferential end at an opposite side to a side at which the flange parts are unevenly arranged.

Thereby, the outer ring is fixed to the partition wall by the plurality of flange parts. Also, as compared to a configuration where the flange parts are arranged at equal intervals over the entire circumference, at least one of the first rotation angle detector and the second rotation angle detector is likely to be located at a radially inner side. Thereby, at least one of the first rotation angle detector and the second rotation angle detector can be made small. For this reason, a weight of the electric vehicle drive device is saved.

### Effects of the Invention

The present invention can provide the electric vehicle drive device having the transmission mechanism and capable of reducing the noise to occur in the output of the rotation angle detector.

FIG. 1 is a pictorial view depicting a configuration of an electric vehicle drive device of an embodiment.
FIG. 2 is a pictorial view depicting a path through which torque is transmitted when the electric vehicle drive device of the embodiment is in a first transmission state.
FIG. 3 is a pictorial view depicting a path through which torque is transmitted when the electric vehicle drive device of the embodiment is in a second transmission state.
FIG. 4 is a front view of the electric vehicle drive device of the embodiment.
FIG. 5 is a sectional view taken along a line V-V of FIG. 4.
FIG. 6 is an enlarged sectional view of a first rotor holding member of FIG. 5.
FIG. 7 is an enlarged sectional view of a second rotor holding member of FIG. 5.
FIG. 8 is a perspective view of a partition wall, a clutch device and a first rotation angle detector, when seen from a first motor-side.
FIG. 9 is a perspective view of the partition wall, the clutch device and a second rotation angle detector, when seen from a second motor-side.
FIG. 10 is a perspective view of the clutch device and the first rotation angle detector, when seen from the first motor-side.
FIG. 11 is a perspective view of the clutch device and the second rotation angle detector, when seen from the second motor-side.
FIG. 12 is a perspective view of the clutch device, when seen from the first motor-side.
FIG. 13 is a perspective view of the clutch device, when seen from the second motor-side.
FIG. 14 is a pictorial view depicting an example of a position of a second signal line relative to a position of a first signal line.
FIG. 15 is a perspective view of a first rotor holding member in accordance with a modified embodiment, when seen from one side.
FIG. 16 is a perspective view of the first rotor holding member in accordance with the modified embodiment, when seen from the other side.

### DETAILED DESCRIPTION OF EMBODIMENTS

An embodiment for implementing the present invention will be described in detail with reference to the drawings. The present invention is not construed as being limited to the embodiment. Also, the constitutional elements to be described below include those that can be easily conceived by one skilled in the art and those that are substantially the same. Also, the constitutional elements to be described below can be omitted, replaced or changed without departing from the gist of the present invention.

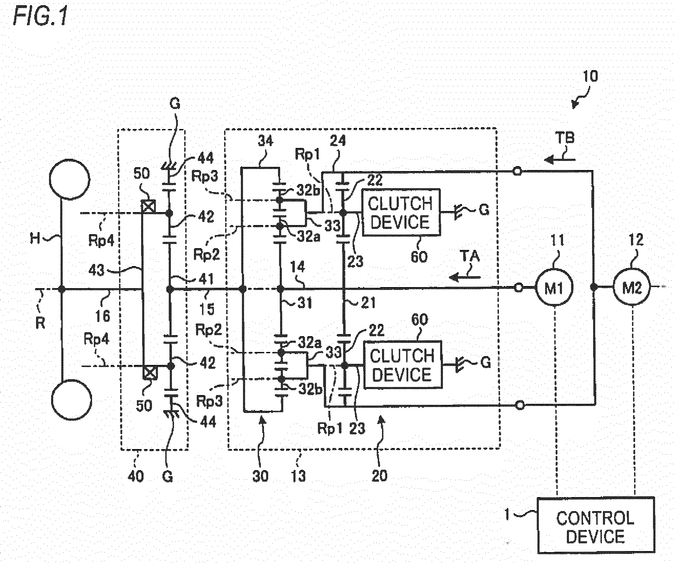

FIG. 1 is a pictorial view depicting a configuration of an electric vehicle drive device of an embodiment. An electric vehicle drive device 10 includes a case G, a first motor 11, a second motor 12, a transmission mechanism 13, a deceleration mechanism 40, a wheel bearing 50, a wheel input/output shaft 16, and a control device 1. The case G is configured to support the first motor 11, the second motor 12, the transmission mechanism 13 and the deceleration mechanism 40.

The first motor 11 can output first torque TA. The second motor 12 can output second torque TB. The transmission mechanism 13 is coupled to the first motor 11. Thereby, when the first motor 11 operates, the first torque TA is transmitted (input) from the first motor II to the transmission mechanism 13. Also, the transmission mechanism 13 is coupled to the second motor 12. Thereby, when the second motor 12 operates, the second torque TB is transmitted (input) from the second motor 12 to the transmission mechanism 13. The operation of the motor described here means that an input/output shaft of the first motor 11 or the second motor 12 rotates as power is fed to the first motor 11 or the second motor 12.

The transmission mechanism 13 is coupled to the first motor 11, the second motor 12 and the wheel input/output shaft 16, and can change a deceleration ratio (a ratio of an input angular velocity to an output angular velocity to the transmission mechanism 13). The transmission mechanism 13 includes a sun gear shaft 14, a first planetary gear mechanism 20, a second planetary gear mechanism 30, and a clutch device 60.

The sun gear shaft 14 is coupled to the first motor 11. When the first motor 11 operates, the sun gear shaft 14 rotates about a rotation axis R.

The first planetary gear mechanism 20 is a single pinion-type planetary gear mechanism, for example. The first planetary gear mechanism 20 includes a first sun gear 21, a first pinion gear 22, a first carrier 23, and a first ring gear 24.

The first sun gear 21 is coupled to the sun gear shaft 14. The first sun gear 21 can rotate (rotate on its own axis) about the rotation axis R, together with the sun gear shaft 14. When the first motor 11 operates, the first torque TA is transmitted from the first motor 11 to the first sun gear 21. Thereby, when the first motor 11 operates, the first sun gear 21 rotates (rotates on its own axis) about the rotation axis R. The first pinion gear 22 meshes with the first sun gear 21.

The first carrier 23 is supported to the sun gear shaft 14. The first carrier 23 is configured to support the first pinion gear 22 so that the first pinion gear 22 can rotate (rotate on its own axis) about a first pinion rotation axis Rp1. The first pinion rotation axis Rp1 is parallel with the rotation axis R, for example. Also, the first carrier 23 is configured to support the first pinion gear 22 so that the first pinion gear 22 can revolve around the rotation axis R.

The first ring gear 24 meshes with the first pinion gear 22. The first ring gear 24 can rotate (rotate on its own axis) about the rotation axis R. Also, the first ring gear 24 is coupled to the second motor 12. When the second motor 12 operates, the second torque TB is transmitted from the second motor 12 to the first ring gear 24. Thereby, when the second motor 12 operates, the first ring gear 24 rotates (rotates on its own axis) about the rotation axis R.

The clutch device 60 is a one-way clutch device, for example, and is configured to transmit only torque of a first direction and not to transmit torque of a second direction opposite to the first direction. The clutch device 60 is arranged between the case G and the first carrier 23. The clutch device 60 can restrain rotation of the first carrier 23. Specifically, the clutch device 60 can switch a state in which rotation of the first carrier 23 about the rotation axis R is restrained (braked) and a state in which the rotation is allowed. That is, the clutch device 60 can enable the first carrier 23 to rotate relative to the case G and disable the first carrier 23 from rotating relative to the case G. In below descriptions, the state in which the clutch device 60 restrains (brakes) the rotation is referred to as 'braking state' and the state in which the rotation is allowed is referred to as 'non-braking state'.

The second planetary gear mechanism 30 is a double pinion-type planetary gear mechanism, for example. The second planetary gear mechanism 30 includes a second sun gear 31, a second pinion gear 32a, a third pinion gear 32b, a second carrier 33, and a second ring gear 34.

The second sun gear 31 is coupled to the sun gear shaft 14. When the first motor 11 operates, the first torque TA is transmitted from the first motor 11 to the second sun gear 31. The second sun gear 31 can rotate (rotate on its own axis) about the rotation axis R, together with the sun gear shaft 14 and the first sun gear 21. The second pinion gear 32a meshes with the second sun gear 31. The third pinion gear 32b meshes with the second pinion gear 32a.

The second carrier 33 is supported to the sun gear shaft 14. The second carrier 33 is configured to support the second pinion gear 32a so that the second pinion gear 32a can rotate (rotate on its own axis) about a second pinion rotation axis Rp2. Also, the second carrier 33 is configured to support the third pinion gear 32b so that the third pinion gear 32b can rotate (rotate on its own axis) about a third pinion rotation axis Rp3. The second pinion rotation axis Rp2 and the third pinion rotation axis Rp3 are parallel with the rotation axis R, for example. Also, the second carrier 33 is configured to support the second pinion gear 32a and the third pinion gear 32b so that the second pinion gear 32a and the third pinion gear 32b can revolve around the rotation axis R. Also, the second carrier 33 is coupled to the first ring gear 24. Thereby, when the first ring gear 24 rotates (rotates on its own axis), the second carrier 33 rotates (rotates on its own axis) about the rotation axis R.

The second ring gear 34 meshes with the third pinion gear 32b. The second ring gear 34 can rotate (rotate on its own axis) about the rotation axis R. Also, the second ring gear 34 is coupled to a transmission mechanism input/output shaft 15 of the transmission mechanism 13. Thereby, when the second ring gear 34 rotates (rotates on its own axis), the transmission mechanism input/output shaft 15 rotates.

The deceleration mechanism 40 is arranged between the transmission mechanism 13 and a wheel H of the electric vehicle. The deceleration mechanism 40 is configured to decelerate an angular velocity of the transmission mechanism input/output shaft 15 and to output the same to the wheel input/output shaft 16. The wheel input/output shaft 16 is coupled to the wheel H of the electric vehicle, and is configured to transmit power between the deceleration mechanism 40 and the wheel H. The torque generated from at least one of the first motor 11 and the second motor 12 is transmitted to the wheel H by way of the transmission mechanism 13 and the deceleration mechanism 40. In the meantime, the torque that is generated from the wheel H while the electric vehicle travels on a downhill road, for example, is transmitted to at least one of the first motor 11 and the second motor 12 by way of the deceleration mechanism 40 and the transmission mechanism 13. In this case, at least one of the first motor 11 and the second motor 12 to which the torque is transmitted operates as a generator. A rotating resistance of the generator is a regenerative brake and acts on the electric vehicle, as a braking force. The deceleration mechanism 40 includes a third sun gear 41, a fourth pinion gear 42, a third carrier 43, and a third ring gear 44.

The third sun gear 41 is coupled to the transmission mechanism input/output shaft 15. That is, the third sun gear 41 is coupled to the second ring gear 34 via the transmission mechanism input/output shaft 15. The fourth pinion gear 42 meshes with the third sun gear 41. The third carrier 43 is configured to support the fourth pinion gear 42 so that the fourth pinion gear 42 can rotate on its own axis about a fourth pinion rotation axis Rp4 and the fourth pinion gear 42 can revolve around the third sun gear 41. The third ring gear 44 meshes with the fourth pinion gear 42 and is fixed to the case G. The third carrier 43 is coupled to the wheel H by way of the wheel input/output shaft 16. Also, the third carrier 43 is rotatably supported by the wheel bearing 50.

The deceleration mechanism 40 is configured to drive the wheel H by rotating the wheel input/output shaft 16 at a speed lower than the angular velocity of the transmission mechanism input/output shaft 15. For this reason, even when the maximum torques of the first motor 11 and the second motor 12 are small, the electric vehicle drive device 10 can transmit the torque, which is necessary when starting the electric vehicle or going up an uphill road, to the wheel H. As a result, it is possible to operate the first motor 11 and the second motor 12 with small current and to miniaturize and lighten the first motor 11 and the second motor 12. Further, it is possible to save the manufacturing cost of the electric vehicle drive device 10 and to lighten the same.

The control device 1 is configured to control operations of the electric vehicle drive device 10. Specifically, the control device 1 is configured to control the angular velocities, rotating directions and outputs of the first motor 11 and the second motor 12. The control device 1 is a microcomputer, for example.

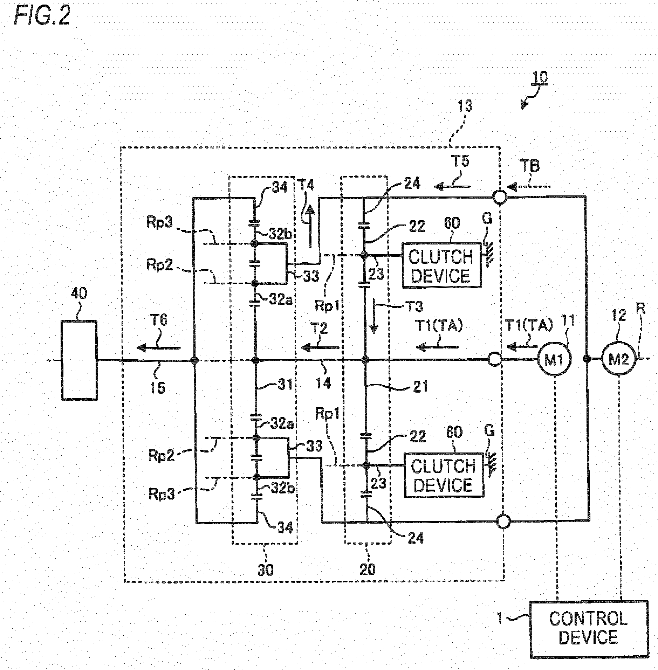

FIG. 2 illustrates a path through which torque is transmitted when the electric vehicle drive device of the embodiment is in a first transmission state. The electric vehicle drive device 10 can implement two transmission states of a first transmission state and a second transmission state.

The first transmission state is a so-called low gear state, and can increase the deceleration ratio. That is, in the first transmission state, the torque that is to be transmitted to the transmission mechanism input/output shaft 15 increases. The first transmission state is mainly used when the electric vehicle requires a high drive force upon traveling. The case where the high drive force is required includes a case where the elective vehicle starts on an uphill road or goes up the uphill road, for example. In the first transmission state, magnitudes of the torques that are to be generated from the first motor 11 and the second motor 12 are the same, and directions of the torques are opposite to each other. The torque generated from the first motor 11 is input to the first sun gear 21. The torque generated from the second motor 12 is input to the first ring gear 24. In the first transmission state, the clutch device 60 is in a braking state. That is, in the first transmission state, the first pinion gear 22 can rotate on its own axis but cannot revolve.

In the first transmission state, the torque that is to be output from the first motor 11 is referred to as first torque T1, and the torque that is to be output from the second motor 12 is referred to as second torque T5. The first torque T1 output from the first motor 11 is input to the first sun gear 21 by way of the sun gear shaft 14. Then, the first torque T1 merges with circulation torque T3 at the first sun gear 21, so that it becomes resultant torque T2. The resultant torque T2 is output from the first sun gear 21. The circulation torque T3 is torque transmitted from the first ring gear 24 to the first sun gear 21.

The first sun gear 21 and the second sun gear 31 are coupled to each other with the sun gear shaft 14. For this reason, in the first transmission state, the resultant torque T2 output from the first sun gear 21 is transmitted to the second sun gear 31 by way of the sun gear shaft 14. Then, the resultant torque T2 is amplified by the second planetary gear mechanism 30. Also, the resultant torque T2 is distributed to first distribution torque T6 and second distribution torque T4 by the second planetary gear mechanism 30. The first distribution torque T6 is torque obtained as the resultant torque T2 is distributed to the second ring gear 34 and is amplified, and is output from the transmission mechanism input/output shaft 15. The second distribution torque T4 is torque obtained as the resultant torque T2 is distributed to the second ring carrier 33 and is amplified.

The first distribution torque T6 is output from the transmission mechanism input/output shaft 15 to the deceleration mechanism 40. Then, the first distribution torque T6 is amplified at the deceleration mechanism 40, and is then output to the wheel H by way of the wheel input/output shaft 16 shown in FIG. 1. As a result, the electric vehicle is enabled to travel.

The second carrier 33 and the first ring gear 24 are configured to integrally rotate. The second distribution torque T4 distributed to the second carrier 33 is composed with the second torque T5 of the second motor 12 at the first ring gear 24. A direction of the second torque T5 (the torque of the second motor 12) is opposite to a direction of the torque of the first motor 11.

By the first planetary gear mechanism 20, a magnitude of the resultant torque of the second torque T5 and the second distribution torque T4 having returned to the first ring gear 24 is decreased and a direction of the resultant torque of the second torque T5 and the second distribution torque T4 is reversed. The resultant torque of the second torque T5 and the second distribution torque T4 becomes the circulation torque T3 at the first sun gear 21. In this way, since the torque circulates between the first planetary gear mechanism 20 and the second planetary gear mechanism 30, the transmission mechanism 13 can increase the deceleration ratio. That is, the electric vehicle drive device 10 can generate the high torque in the first transmission state.

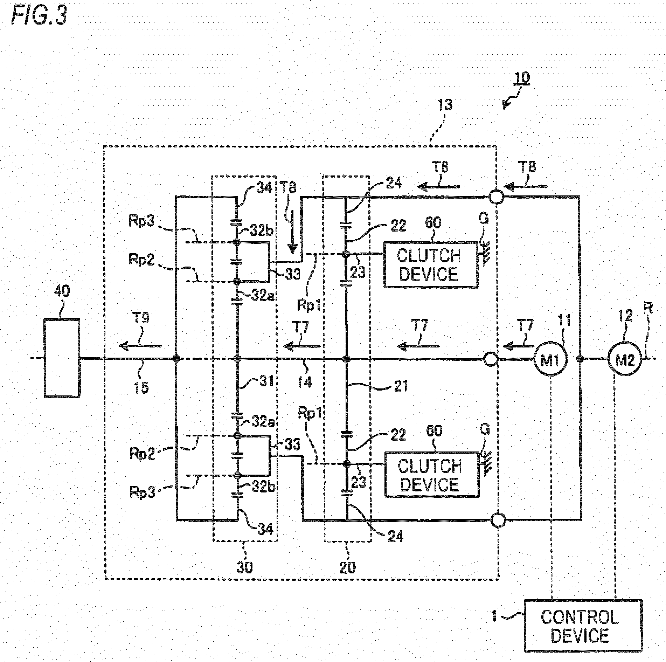

FIG. 3 is a pictorial view depicting a path through which torque is transmitted when the electric vehicle drive device of the embodiment is in a second transmission state. The second transmission state is a so-called high gear state, and can decrease the deceleration ratio. That is, the torque that is to be transmitted to the transmission mechanism input/output shaft 15 decreases but friction loss of the transmission mechanism 13 decreases. In the second transmission state, the magnitudes and directions of the torques that are to be generated from the first motor 11 and the second motor 12 are the same. In the second transmission state, the torque that is to be output from the first motor 11 is referred to as first torque T7, and the torque that is to be output from the second motor 12 is referred to as second torque T8. Resultant torque T9 shown in FIG. 3 is torque that is output from the transmission mechanism input/output shaft 15 and is transmitted to the deceleration mechanism 40.

In the second transmission state, the torque of the first motor 11 is input to the first sun gear 21, and the torque of the second motor 12 is input to the first ring gear 24. In the second transmission state, the clutch device 60 is in a non-braking state. That is, in the second transmission state, the first pinion gear 22 can rotate on its own axis and can also revolve. Thereby, in the second transmission state, the torque circulation between the first planetary gear mechanism 20 and the second planetary gear mechanism 30 is interrupted. Also, in the second transmission state, since the first carrier 23 can revolve, the first sun gear 21 and the first ring gear 24 can relatively freely rotate on their own axes.

In the second transmission state, a ratio of the second torque T8 to the first torque T7 is defined as a ratio of the number of teeth of the second ring gear 34 to the number of teeth of the second sun gear 31. The first torque T7 merges with the second torque T8 at the second carrier 33. As a result, the resultant torque T9 is transmitted to the second ring gear 34.

The angular velocity of the transmission mechanism input/output shaft 15 is determined by an angular velocity of the second sun gear 31 that is to be driven by the first motor 11 and an angular velocity of the second carrier 33 that is to be driven by the second motor 12. Therefore, even when the angular velocity of the transmission mechanism input/output shaft 15 is made constant, it is possible to change a combination of the angular velocity of the first motor 11 and the angular velocity of the second motor 12.

Like this, the combination of the angular velocity of the transmission mechanism input/output shaft 15, the angular velocity of the first motor 11 and the angular velocity of the second motor 12 is not determined in a unique manner. For this reason, when the control device 1 continues to smoothly control the angular velocity of the first motor 11 and the angular velocity of the second motor 12, a so-called transmission shock is reduced even though the state of the transmission mechanism 13 changes between the first transmission state and the second transmission state.

When the angular velocity of the second sun gear 31 is made constant, the higher the angular velocity of the second carrier 33 is, the slower the angular velocity of the second ring gear 34 is. Also, the slower the angular velocity of the second carrier 33 is, the higher the angular velocity of the second ring gear 34 is. For this reason, the angular velocity of the second ring gear 34 continuously changes, in correspondence to the angular velocity of the second sun gear 31 and the angular velocity of the second carrier 33. Accordingly, the electric vehicle drive device 10 can continuously change the deceleration ratio by changing the angular velocity of the second torque T8 that is to be output from the second motor 12.

Also, the electric vehicle drive device 10 has a plurality of combinations of the angular velocity of the first torque T7, which is to be output from the first motor 11, and the angular velocity of the second torque T8, which is to be output from the second motor 12, when making the angular velocity of the second ring gear 34 constant. That is, for example, even when the angular velocity of the first torque T7, which is to be output from the first motor 11, changes, the angular velocity of the second torque T8, which is to be output from the second motor 12, changes, so that the angular velocity of the second ring gear 34 is maintained constant. For this reason, the electric vehicle drive device 10 can reduce an amount of change in the angular velocity of the second ring gear 34 upon the switching from the first transmission state to the second transmission state. As a result, the electric vehicle drive device 10 can reduce the transmission shock.

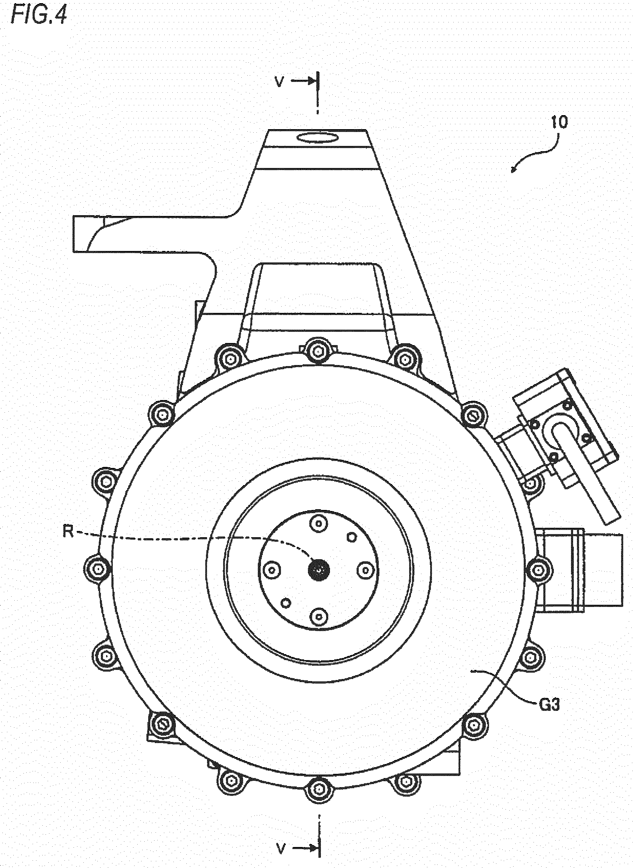

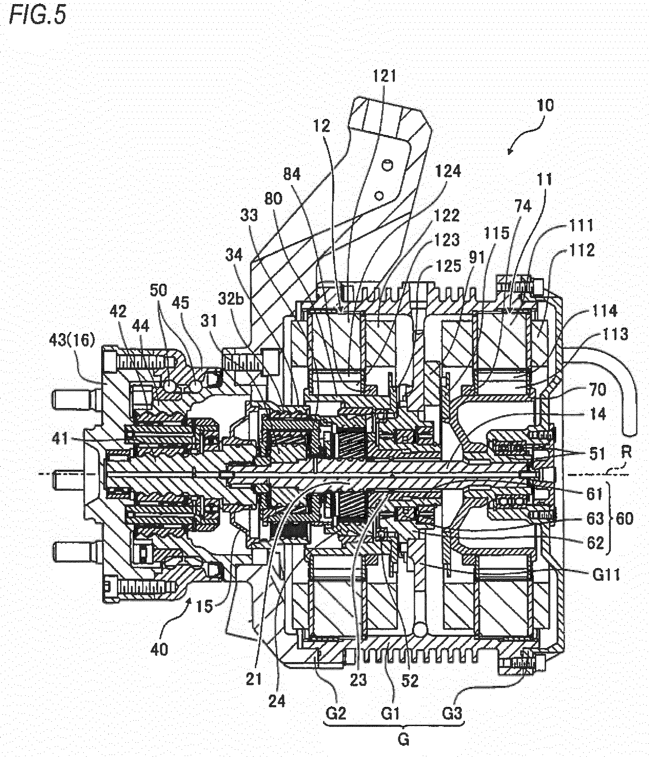

FIG. 4 is a front view of the electric vehicle drive device of the embodiment. FIG. 5 is a sectional view taken along a line V-V of FIG. 4. In the below, the overlapping descriptions of the above-described constitutional elements are omitted, and the above-described constitutional elements are denoted with the same reference numerals in the drawings. Also, an axial direction (a direction of the rotation axis R) of the first motor 11 is simply described as the axial direction. A radial direction (a direction perpendicular to the rotation axis R) of the first motor 11 is simply described as the radial direction. A circumferential direction (a tangential direction of a circle of which a center is the rotation axis R) of the first motor 11 is simply described as the circumferential direction.

As shown in FIG. 5, the case G includes a case G1, a case G2, and a case G3. The case G1 is a tube-shaped member, and has an annular partition wall G11 protruding from an inner wall. The partition wall G11 spaces the first motor 11 and the second motor 12. That is, the first motor 11 is arranged at one side of the partition wall G11, and the second motor 12 is arranged at the other side of the partition wall G11. The case G2 is a tube-shaped member and is provided at a position closer to the wheel H than the case G1. The case G1 and the case G2 are fastened by a plurality of bolts, for example. The case G3 is provided at an end face, which is opposite to the case G2, of two end faces of the case G1, i.e., at an end face of the case G1 facing toward a vehicle body of the electric vehicle. The case G1 and the case G3 are fastened by a plurality of bolts, for example. The case G3 is configured to block one opening of the case G1.

As shown in FIG. 5, the first motor 11 includes a first stator core 111, a first coil 112, a first rotor core 113, a first magnet 114, a first member to be detected 115, and a first rotor holding member 70. The first stator core 111 is a tube-shaped member. The first stator core 111 is fitted to an inner peripheral surface of the case G1. The first coil 112 is provided at a plurality of parts of the first stator core 111. The first coil 112 is wound on the first stator core 111 via an insulator.

The first rotor core 113 is arranged at a radially inner side. The first rotor core 113 is a tube-shaped member. The first magnet 114 is provided at a plurality of parts of an outer peripheral surface of the first rotor core 113, for example. The first member to be detected 115 is used to detect a rotation angle of the first rotor core 113. The first member to be detected 115 is an annular member, for example, and is configured to rotate together with the first rotor core 113.

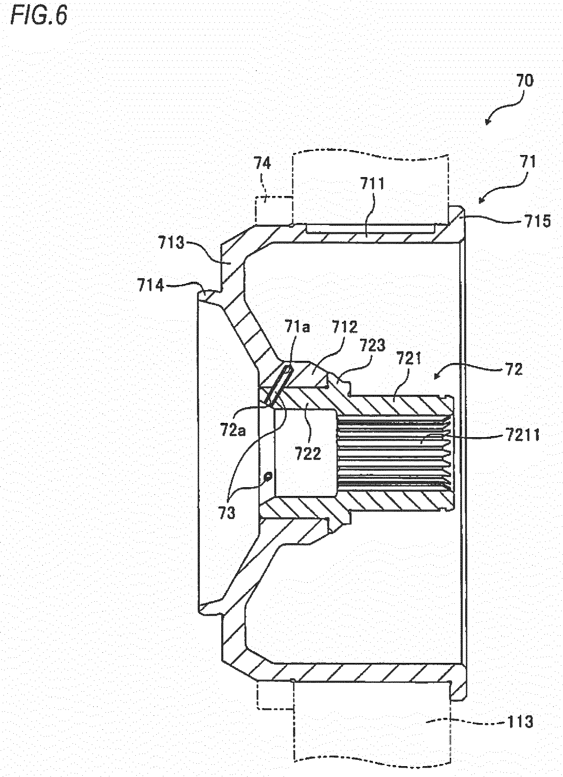

FIG. 6 is an enlarged sectional view of the first rotor holding member of FIG. 5. The first rotor holding member 70 is a member configured to support the first rotor core 113 so that the first rotor core can rotate about the rotation axis R. As shown in FIG. 5, the first rotor holding member 70 is supported to the case G3 via a bearing 51 and is coupled to the sun gear shaft 14. As shown in FIG. 6, the first rotor holding member 70 includes a first outer member 71, a first inner member 72, first pins 73, and a first positioning ring 74.

The first outer member 71 is a member made of first metal. The first metal is an aluminum alloy, for example. A convex portion provided on one of an inner peripheral surface of the first rotor core 113 and an outer peripheral surface of the first outer member 71 is fitted to a concave portion provided on the other. That is, the first rotor core 113 and the first outer member 71 are coupled by a so-called Spigot joint. As shown in FIG. 6, the first outer member 71 includes an outer pipe part 711, an inner pipe part 712, a coupling part 713, a rib 714, and a flange 715. The outer pipe part 711, the inner pipe part 712, the coupling part 713, the rib 714 and the flange 715 are integrally formed. The outer pipe part 711 is a tube-shaped member, and is in contact with the inner peripheral surface of the first rotor core 113. The inner pipe part 712 is a tube-shaped member, and is in contact with an outer peripheral surface of the first inner member 72. The inner pipe part 712 is provided with a first concave portion 71a. The first concave portion 71a is a circular column-shaped recess, for example. The coupling part 713 is configured to couple one end of the outer pipe part 711 and one end of the inner pipe part 712. Specifically, the coupling part 713 is curved, and is closer to the partition wall G11 than the outer pipe part 711 and the inner pipe part 712. The rib 714 is an annular member protruding from the coupling part 713 in the direction of the rotation axis R. The rib 714 is a member for supporting the first member to be detected 115 shown in FIG. 5. The flange 715 is an annular member protruding radially outward from the other end (an end portion opposite to the end portion connected to the coupling part 713) of the outer pipe part 711. The flange 715 is used to position the first rotor core 113.

The first inner member 72 is a member formed of second metal. The second metal is metal having a specific weight larger than that of the first metal. For example, carbon steel may be used. As shown in FIG. 6, the first inner member 72 includes a small-pipe part 721, a large-pipe part 722, and a flange 723. The small-pipe part 721, the large-pipe part 722 and the flange 723 are integrally formed. The small-pipe part 721 is a tube-shaped member, and has a spline 7211 provided on an inner peripheral surface thereof. The spline 7211 is fitted to a spline provided to an end portion of the sun gear shaft 14. The large-pipe part 722 is a tube-shaped member, and is in contact with an inner peripheral surface of the inner pipe part 712 of the first outer member 71. The large-pipe part 722 is formed with a first hole 72a. The first hole 72a is a circular column-shaped through-hole having the same diameter as a diameter of the first concave portion 71a of the inner pipe part 712, for example, and is overlapped with the first concave portion 71a. The flange 723 is an annular member protruding radially outward from an outer peripheral surface of the large-pipe part 722. The flange 723 is used to position the first outer member 71.

The first pin 73 is a member for easily transmitting the torque between the first outer member 71 and the first inner member 72. The first pin 73 is arranged at a position spanning over the first concave portion 71a and the first hole 72a. The first pin 73 is a circular column-shaped pin having substantially the same diameter as diameters of the first concave portion 71a and the first hole 72a, for example. For example, the first inner member 72 is fixed to the first outer member 71 by press-fitting. More specifically, the large-pipe part 722 is fixed to the inner peripheral surface of the inner pipe part 712 by shrinkage fitting. Thereby, since the frictional force is generated between the outer peripheral surface of the large-pipe part 722 and the inner peripheral surface of the inner pipe part 712, the torque is transmitted to some extent between the first outer member 71 and the first inner member 72. However, since the inner pipe part 712 is made of the aluminum alloy, it is difficult to increase the frictional force that is to be generated between the outer peripheral surface of the large-pipe part 722 and the inner peripheral surface of the inner pipe part 712. Therefore, after the first inner member 72 is press-fitted to the first outer member 71, the first pin 73 is press-fitted from the first hole 72a toward the first concave portion 71a. Thereby, the torque is transmitted via the first pin 73 between the first outer member 71 and the first inner member 72. At this time, a shear force is generated at the first pin 73. The first pin 73 is provided, so that the torque is more likely to be transmitted between the first outer member 71 and the first inner member 72, as compared to a configuration where the first outer member 71 and the first inner member 72 are fixed only by the press-fitting. Also, since the first concave portion 71a is located at the radially outer side with respect to the first hole 72a, the first pin 73 is prevented from separating due to the centrifugal force.

The first positioning ring 74 is a member for positioning the first rotor core 113. The first rotor core 113 is sandwiched and thus positioned between the first positioning ring 74 and the flange 715. The first positioning ring 74 is an annular member formed of aluminum alloy, for example. For example, the first positioning ring 74 is fitted to the outer peripheral surface of the outer pipe part 711 by the press-fitting. The first positioning ring 74 is located at a position of the rib 714-side with respect to the first rotor core 113. More specifically, the first positioning ring 74 is arranged at a position radially overlapped with the inner pipe part 712 and the coupling part 713. A vicinity of rib 714 is made to have relatively high rigidity. The rigidity means a geometric second moment, for example. For this reason, a portion of the outer pipe part 711 closer to the coupling part 713 is more difficult to be deformed with respect to the radial force. Therefore, the first positioning ring 74 is arranged at the position closer to the rib 714 than the first rotor core 113, so that it is easy to increase the press-fitting force when press-fitting the first positioning ring 74 to the outer pipe part 711.

As shown in FIG. 5, the second motor 12 includes a second stator core 121, a second coil 122, a second rotor core 123, a second magnet 124, a second member to be detected 125, and a second rotor holding member 80. The second stator core 121 is a tube-shaped member. The second stator core 121 is fitted to the inner peripheral surface of the case G1. The second coil 122 is provided at a plurality of parts of the second stator core 121. The second coil 122 is wound on the second stator core 121 via an insulator.

The second rotor core 123 is arranged at a radially inner side of the second stator core 121. The second rotor core 123 is a tube-shaped member. The second magnet 124 is provided at a plurality of parts of an outer peripheral surface of the second rotor core 123, for example. The second member to be detected 125 is used to detect a rotation angle of the second rotor core 123. The second member to be detected 125 is an annular member, for example, and is configured to rotate together with the second rotor core 123.

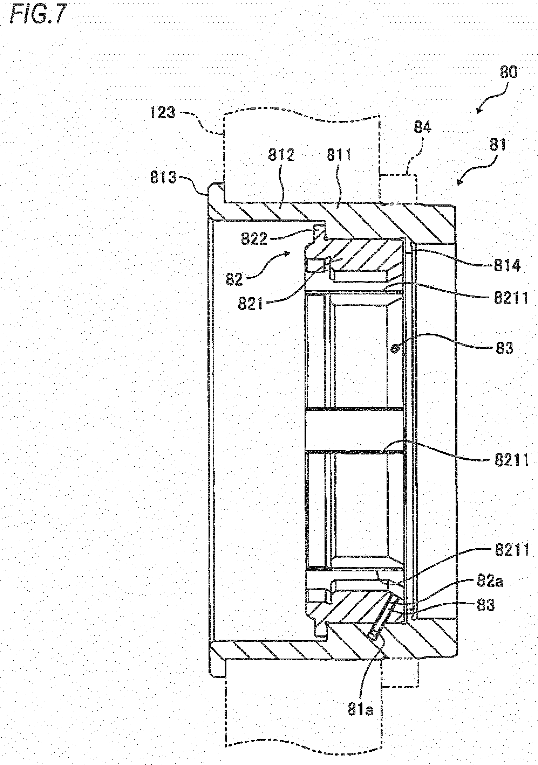

FIG. 7 is an enlarged sectional view of the second rotor holding member of FIG. 5. The second rotor holding member 80 is a member configured to support the second rotor core 123 so that the second rotor core can rotate about the rotation axis R. As shown in FIG. 5, the second rotor holding member 80 is supported to the clutch device 60 via a bearing 52 and is coupled to the first ring gear 24. As shown in FIG. 7, the second rotor holding member 80 includes a second outer member 81, a second inner member 82, second pins 83, and a second positioning ring 84.

The second outer member 81 is a member made of third metal. The third metal is an aluminum alloy, for example. A convex portion provided on one of an inner peripheral surface of the second rotor core 123 and an outer peripheral surface of the second outer member 81 is fitted to a concave portion provided on the other. That is, the second rotor core 123 and the second outer member 81 are coupled by a so-called Spigot joint. As shown in FIG. 7, the second outer member 81 includes a thickened part 811, a thinned part 812, a flange 813, and a projection 814. The thickened part 811, the thinned part 812, the flange 813 and the projection 814 are integrally formed. The thickened part 811 is a tube-shaped member, and is in contact with the inner peripheral surface of the second rotor core 123 and an outer peripheral surface of the second inner member 82. The thickened part 811 is provided with a second concave portion 81a. The second concave portion 81a is a circular column-shaped recess, for example. The thinned part 812 is a tube-shaped member, and is in contact with the inner peripheral surface of the second rotor core 123. The thinned part 812 is arranged at an opposite side to the partition wall G11 with respect to the thickened part 811. A thickness of the thinned part 812 is smaller than a thickness of the thickened part 811. The flange 813 is an annular member protruding radially outward from an end portion of the thinned part 812 opposite to the thickened part 811. The flange 813 is used to position the second rotor core 123. The projection 814 is an annular member protruding radially inward from an inner peripheral surface of the thickened part 811. The projection 814 is in contact with the bearing 52. The projection 814 is used to position the bearing 52.

The second inner member 82 is a member formed of fourth metal. The fourth metal is metal having a specific weight larger than that of the third metal. For example, carbon steel may be used. As shown in FIG. 7, the second inner member 82 includes a fitting part 821 and a flange 822. The fitting part 821 and the flange 822 are integrally formed. The fitting part 821 is a tube-shaped member, and has a plurality of concave portions 8211 provided on an inner peripheral surface thereof. The concave portion 8211 is fitted to a convex portion provided to an outer peripheral surface of the first ring gear 24. The fitting part 821 is formed with a second hole 82a. The second hole 82a is a circular column-shaped through-hole having the same diameter as a diameter of the second concave portion 81a of the thickened part 811, for example, and is overlapped with the second concave portion 81a. The flange 822 is an annular member protruding radially outward from an outer peripheral surface of the fitting part 821. The flange 822 is in contact with a step between the thickened part 811 and the thinned part 812. The flange 822 is used to position the second inner member 82.

The second pin 83 is a member for easily transmitting the torque between the second outer member 81 and the second inner member 82. The second pin 83 is arranged at a position spanning over the second concave portion 81a and the second hole 82a. The second pin 83 is a circular column-shaped pin having substantially the same diameter as diameters of the second concave portion 81a and the second hole 82a, for example. For example, the second inner member 82 is fixed to the second outer member 81 by press-fitting. More specifically, the fitting part 821 is fixed to the inner peripheral surface of the thickened part 811 by shrinkage fitting. Thereby, since the frictional force is generated between the outer peripheral surface of the fitting part 821 and the inner peripheral surface of the thickened part 811, the torque is transmitted to some extent between the second outer member 81 and the second inner member 82. However, since the thickened part 811 is made of the aluminum alloy, it is difficult to increase the frictional force that is to be generated between the outer peripheral surface of the fitting part 821 and the inner peripheral surface of the thickened part 811. Therefore, after the second outer member 81 and the second inner member 82 are fixed, the second pin 83 is press-fitted from the second hole 82a toward the second concave portion 81a. Thereby, the torque is transmitted via the second pin 83 between the second outer member 81 and the second inner member 82. At this time, a shear force is generated at the second pin 83. The second pin 83 is provided, so that the torque is more likely to be transmitted between the second outer member 81 and the second inner member 82, as compared to a configuration where the second outer member 81 and the second inner member 82 are fixed only by the press-fitting. Also, since the second concave portion 81a is located at the radially outer side with respect to the second hole 82a, the second pin 83 is prevented from separating due to the centrifugal force.

The second positioning ring 84 is a member for positioning the second rotor core 123. The second rotor core 123 is sandwiched and thus positioned between the second positioning ring 84 and the flange 813. The second positioning ring 84 is an annular member formed of aluminum alloy, for example. For example, the second positioning ring 84 is fitted to the outer peripheral surface of the thickened part 811 by the press-fitting. More specifically, the second positioning ring 84 is arranged at a position radially overlapped with the fitting part 821. A portion, which is radially overlapped with the fitting part 821, of the thickened part 811 is more difficult to be deformed with respect to the radial force than a portion that is not overlapped with the fitting part 821. Therefore, the second positioning ring 84 is arranged at the position radially overlapped with the fitting part 821, so that it is easy to increase the press-fitting force when press-fitting the second positioning ring 84 to the thickened part 811.

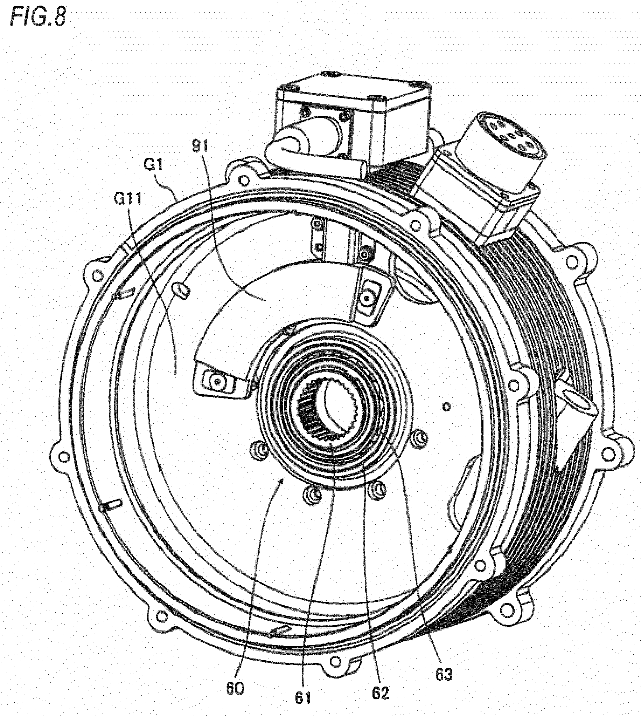

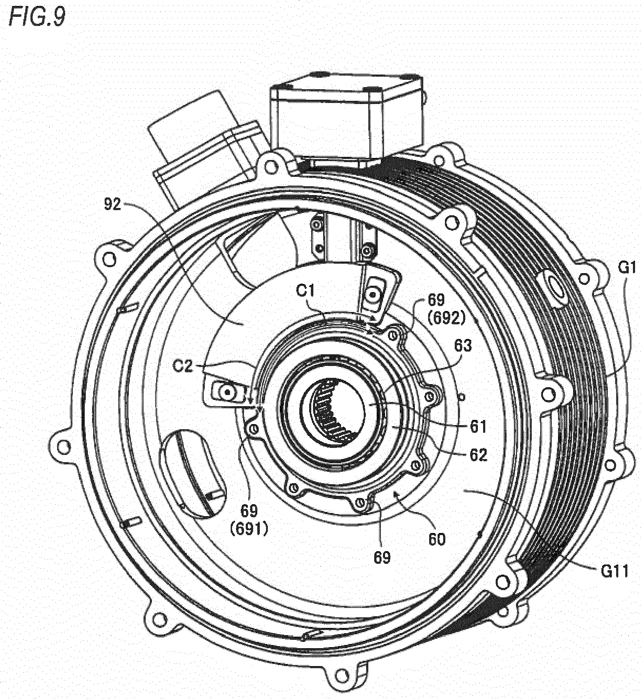

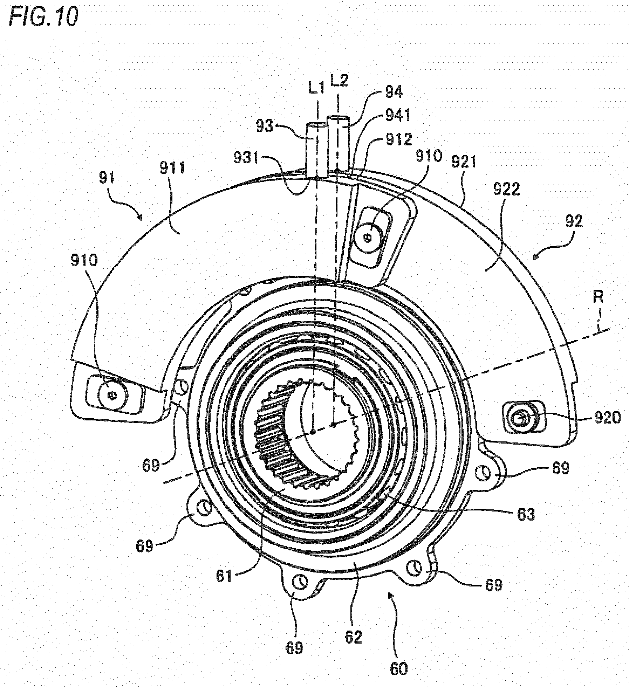

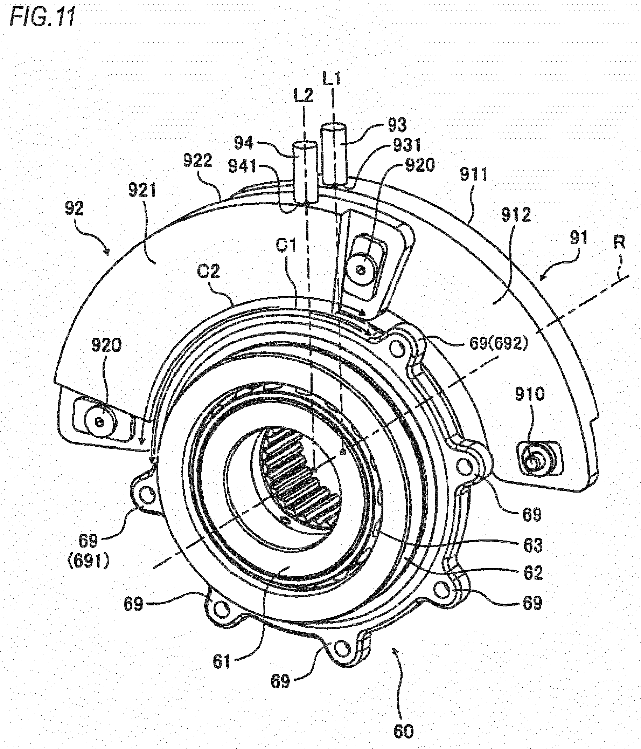

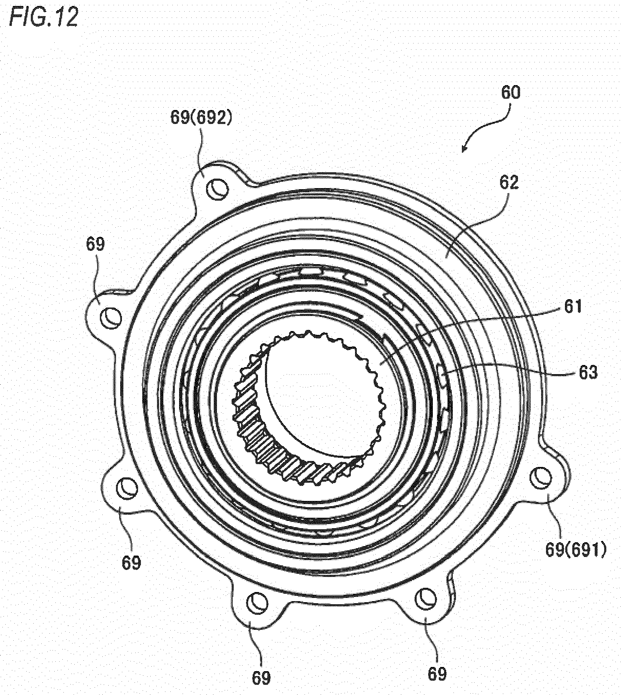

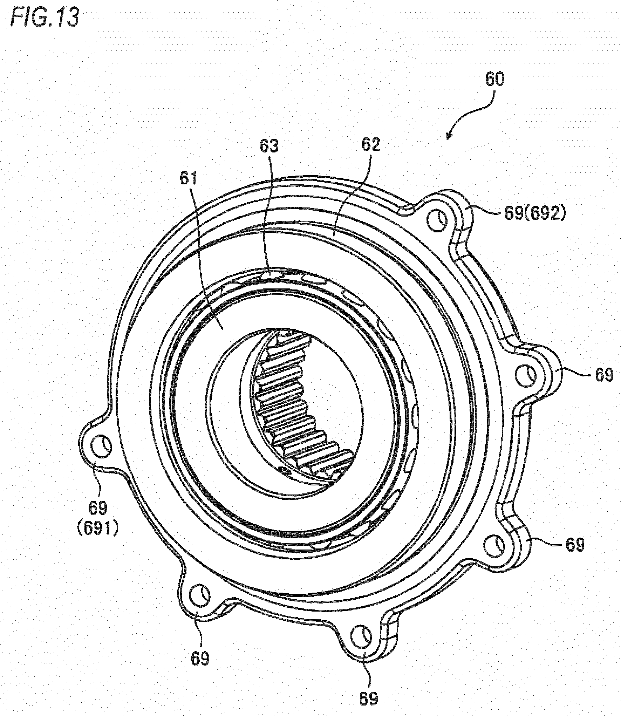

FIG. 8 is a perspective view of the partition wall, the clutch device and the first rotation angle detector, when seen from the first motor-side. FIG. 9 is a perspective view of the partition wall, the clutch device and the second rotation angle detector, when seen from the second motor-side. FIG. 10 is a perspective view of the clutch device and the first rotation angle detector, when seen from the first motor-side. FIG. 11 is a perspective view of the clutch device and the second rotation angle detector, when seen from the second motor-side. FIG. 12 is a perspective view of the clutch device, when seen from the first motor-side. FIG. 13 is a perspective view of the clutch device, when seen from the second motor-side.

As shown in FIGS. 8 and 9, the clutch device 60 is fixed to the partition wall G11. As shown in FIGS. 8 to 13, the clutch device 60 is a so-called cam-type clutch device, and includes an inner ring 61, an outer ring 62, and rollers 63. The inner ring 61 is coupled to the first carrier 23. Specifically, an inner peripheral surface of the inner ring 61 is provided with a spline, and the spline is fitted to a spline provided on an outer peripheral surface of the first carrier 23. The outer ring 62 is coupled to the partition wall G11. The rollers 63 are arranged between the inner ring 61 and the outer ring 62. The rollers 63 are supported to the inner ring 61, and are provided to rotate together with the inner ring 61. When the inner ring 61 rotates in a first direction, the rollers 63 are engaged with the outer ring 62. Thereby, since the inner ring 61 cannot rotate, the first carrier 23 also cannot rotate. On the other hand, when the inner ring 61 rotates in a second direction, the rollers 63 are not engaged with the outer ring 62. Thereby, since the inner ring 61 can rotate, the first carrier 23 also can rotate.

More specifically, the outer ring 62 has a plurality of flange parts 69. The flange parts 69 protrude radially outward from the outer ring 62 and face the partition wall G11. For example, the plurality of flange parts 69 is arranged in a circumferential direction. The flange parts 69 are fastened to the partition wall G11 by bolts or the like. Also, as shown in FIGS. 9 and 11, a distance C1 on a circumference, on which the other flange parts 69 are not arranged, from the flange part 69 of one circumferential end to the flange part 69 of the other end is larger than intervals between the other flange parts 69. That is, the plurality of flange parts 69 is arranged at a part, which is a circumferential part, between one circumferential end and the other circumferential end and is unevenly arranged in the circumferential direction. Thereby, as compared to a configuration where the flange parts 69 are arranged at equal intervals over the entire circumference of the outer ring 62, a weight of the clutch device 60 is saved.

As shown in FIGS. 8 and 9, a first rotation angle detector 91 and a second rotation angle detector 92 are fixed to the partition wall G11. Thereby, as compared to a configuration where a surrounding of the partition wall G11 is a dead space, an axial length of the case G1 is reduced. The first rotation angle detector 91 faces the first member to be detected 115 shown in FIG. 5. The first rotation angle detector 91 can calculate an absolute angle (an absolute electric angle in one pole pair) of the first rotor core 113 by detecting a magnetic flux of the first member to be detected 115. The second rotation angle detector 92 faces the second member to be detected 125 shown in FIG. 5. The second rotation angle detector 92 can calculate an absolute angle of the second rotor core 123 by detecting a magnetic flux of the second member to be detected 125. Also, the control device 1 shown in FIG. 1 is configured to control currents to flow through the first coil 112 and the second coil 122, based on the absolute angle of the first rotor core 113 detected by the first rotation angle detector 91 and the absolute angle of the second rotor core 123 detected by the second rotation angle detector 92.

As shown in FIGS. 8 to 11, the first rotation angle detector 91 has a band shape along the circumferential direction. For example, when seen from the axial direction, an outer peripheral surface of the first rotation angle detector 91 forms a fan-shaped circular arc of which a central angle is about 90°. As shown in FIGS. 10 and 11, the first rotation angle detector 91 is fixed to the partition wall G11 by fastening members 910 provided at both circumferential ends. A first surface 911 (front surface) of the first rotation angle detector 91 faces the first member to be detected 115, and a second surface 912 (back surface) of the first rotation angle detector 91 faces the partition wall G11.

As shown in FIGS. 10 and 11, the first rotation angle detector 91 is connected with a first signal line 93 for outputting an electric signal. One end of the first signal line 93 is connected to the outer peripheral surface of the first rotation angle detector 91, and the other end of the first signal line 93 is arranged outside the case G. The first signal line 93 is connected to one circumferential end of the outer peripheral surface of the first rotation angle detector 91, for example. More specifically, when seen from the first surface 911-side, a connection position of the first signal line 93 to the first rotation angle detector 91 is offset in a clockwise direction from a circumferential center of the outer peripheral surface of the first rotation angle detector 91.

As shown in FIGS. 8 to 11, the second rotation angle detector 92 has a band shape along the circumferential direction, like the first rotation angle detector 91. As shown in FIGS. 10 and 11, the second rotation angle detector 92 is fixed to the partition wall G11 by fastening members 920 provided at both circumferential ends. A first surface 921 (front surface) of the second rotation angle detector 92 faces the second member to be detected 125, and a second surface 922 (back surface) of the second rotation angle detector 92 faces the partition wall G11. Also, as shown in FIG. 9, the second rotation angle detector 92 is arranged along the outer ring 62 of the clutch device 60. As shown in FIGS. 9 and 11, a circumferential length C2 of the inner peripheral surface of the second rotation angle detector 92 is smaller than the distance C1 on the circumference of an opposite side to the side at which the other flange parts 69 are unevenly arranged from the flange part 691 to the flange part 692. Thereby, the second rotation angle detector 92 is arranged at the side at which the other flange parts 69 are not arranged between the flange part 691 and the flange part 692. For this reason, the second rotation angle detector 92 is likely to be positioned at a radially inner side. Therefore, the second rotation angle detector 92 can be easily miniaturized.

As shown in FIGS. 10 and 11, the second rotation angle detector 92 is connected with a second signal line 94 for outputting an electric signal. One end of the second signal line 94 is connected to the outer peripheral surface of the second rotation angle detector 92, and the other end of the second signal line 94 is arranged outside the case G. The second signal line 94 is connected to one circumferential end of the outer peripheral surface of the second rotation angle detector 92, for example. More specifically, when seen from the first surface 921-side, a connection position of the second signal line 94 to the second rotation angle detector 92 is offset in the clockwise direction from a circumferential center of the outer peripheral surface of the second rotation angle detector 92. Also, when seen from the axial direction, a first line L1 passing a root 931 of the first signal line 93 on the first rotation angle detector 91-side and the rotation axis R is overlapped with a second line L2 passing a root 941 of the second signal line 94 on the second rotation angle detector 92-side and the rotation axis R.

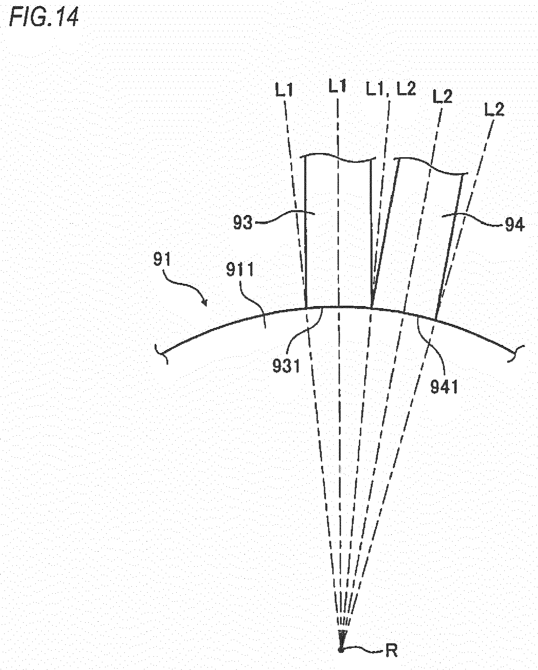

As shown in FIGS. 10 and 11, however, the first line L1 passing a center of the root 931 may not be overlapped with the second line L2 passing a center of the root 941. FIG. 14 is a pictorial view depicting an example of a position of the second signal line relative to a position of the first signal line. As shown in FIG. 14, when seen from the axial direction, the first line L1 passing an end portion of the root 931 may be overlapped with the second line L2 passing an end portion of the root 941. That is, when seen from the axial direction, one of the plurality of the first lines L1 may be overlapped with at least one of the plurality of the second lines L2.

Since the first rotation angle detector 91 and the second rotation angle detector 92 are arranged as described above, the second rotation angle detector 92 is offset in the circumferential direction with respect to the first rotation angle detector 91. In other words, when seen from the axial direction, a part of the second rotation angle detector 92 is overlapped with the first rotation angle detector 91, and the other part of the second rotation angle detector 92 is not overlapped with the first rotation angle detector 91. For this reason, since the fastening member 920 is offset in the circumferential direction with respect to the fastening member 910, the interference between the fastening member 920 and the fastening member 910 is prevented.

In the meantime, the first metal and the third metal may not be the aluminum alloy, and may be the other metal such as magnesium alloy. Also, the first metal and the third metal may be different metals. Also, the second metal and the fourth metal may not be the carbon steel, and may be the other metal such as alloy steel. Also, the second metal and the fourth metal may be different metals.

In the meantime, the first concave portion 71a, the first hole 72a, the second concave portion 81a and the second hole 82a are not necessarily required to have the circular column shape, and may have an angled column shape, for example. Also, the first pin 73 is not necessarily required to have the circular column shape, and may have any shape that is to be fitted to the first concave portion 71a and the first hole 72a. The second pin 83 is not necessarily required to have the circular column shape, and may have any shape that is to be fitted to the second concave portion 81a and the second hole 82a.

In the meantime, the second rotation angle detector 92 is not necessarily required to be arranged at the part, at which the other flange parts 69 are not arranged, between the flange part 691 and the flange part 692, and the first rotation angle detector 91 may be arranged between the flange part 691 and the flange part 692. In this case, the flange parts 69 face the surface of the partition wall G11 facing toward the first motor 11. Also, both the first rotation angle detector 91 and the second rotation angle detector 92 may not be arranged between the flange part 691 and the flange part 692. In this case, the flange part 69 facing the surface of the partition wall G11 facing toward the first motor 11 and the flange part 69 facing the surface of the partition wall G11 facing toward the second motor 12 may be provided.

As described above, the electric vehicle drive device 10 includes the first motor 11, the second motor 12, and the transmission mechanism 13 coupled to the first motor 11 and the second motor 12 and capable of switching the deceleration ratio. The transmission mechanism 13 includes the sun gear shaft 14 coupled to the first motor 11, the first sun gear 21 configured to rotate together with the sun gear shaft 14, the first pinion gear 22 to mesh with the first sun gear 21, and the first ring gear 24 to mesh with the first pinion gear 22 and coupled to the second motor 12. The first motor 11 includes the first stator core 111, the first rotor core 113 arranged at the radially inner side of the first stator core 111, and the first rotor holding member 70 configured to couple the first rotor core 113 and the sun gear shaft 14. The first rotor holding member 70 includes the first outer member 71 in contact with the first rotor core 113 and the first inner member 72 in contact with the sun gear shaft 14. The material of the first outer member 71 is the first metal, and the material of the first inner member 72 is the second metal having the specific weight larger than the specific weight of the first metal.

Thereby, since the material of the first inner member 72 in contact with the sun gear shaft 14 is the second metal having the relatively large specific weight, the wear of the first inner member 72 is suppressed. On the other hand, since the material of the first outer member 71 of which a volume is more likely to increase than the first inner member 72 is the first metal having the relatively small specific weight, the increase in the weight of the first rotor holding member 70 is suppressed. For this reason, the electric vehicle drive device 10 is lightened. Accordingly, the electric vehicle drive device 10 has the transmission mechanism 13 and can reduce an unsprung weight of the electric vehicle.

Also, the first rotor holding member 70 of the electric vehicle drive device 10 includes the first pin 73 arranged at the position spanning over the first concave portion 71a provided to the first outer member 71 and the first hole 72a provided to the first inner member 72 and overlapped with the first concave portion 71a.

Thereby, as compared to a configuration where the first outer member 71 and the first inner member 72 are fixed only by the press-fitting, the torque is more easily transmitted between the first outer member 71 and the first inner member 72. Also, since the first concave portion 71a is located at the radially outer side with respect to the first hole 72a, the first pin 73 is prevented from separating due to the centrifugal force.

Also, the first outer member 71 of the electric vehicle drive device 10 includes the outer pipe part 711 in contact with the first rotor core 113, the inner pipe part 712 in contact with the first inner member 72, the coupling part 713 configured to couple the outer pipe part 711 and the inner pipe part 712, and the rib 714 protruding axially from the coupling part 713. The first rotor holding member 70 includes the first positioning ring 74 fitted to the outer peripheral surface of the outer pipe part 711 at the position of the first rotor core 113 facing toward the rib 714 and being in contact with the first rotor core 113.

Thereby, the first rotor core 113 is positioned by the first positioning ring 74. Also, the rigidity of the outer pipe part 711 adjacent to the rib 714 is relatively high. For this reason, the first positioning ring 74 is arranged at the position closer to the rib 714 than the first rotor core 113, so that it is possible to easily increase the press-fitting force when press-fitting the first positioning ring 74 to the outer pipe part 711. Accordingly, the separation of the first positioning ring 74 is suppressed.

Also, the second motor 12 of the electric vehicle drive device 10 includes the second stator core 121, the second rotor core 123 arranged at the radially inner side of the second stator core 121, and the second rotor holding member 80 configured to couple the second rotor core 123 and the first ring gear 24. The second rotor holding member 80 includes the second outer member 81 in contact with the second rotor core 123 and the second inner member 82 in contact with the first ring gear 24. The material of the second outer member 81 is the third metal, and the material of the second inner member 82 is the fourth metal having the specific weight larger than that of the third metal.

Thereby, since the second inner member 82 in contact with the first ring gear 24 is formed of the fourth metal having the relatively large specific weight, the wear of the second inner member 82 is suppressed. On the other hand, since the material of the second outer member 81 of which a volume is more likely to increase than the second inner member 82 is the third metal having the relatively small specific weight, the increase in the weight of the second rotor holding member 80 is suppressed. For this reason, the electric vehicle drive device 10 is lightened. Accordingly, the electric vehicle drive device 10 has the transmission mechanism 13 and can reduce an unsprung weight of the electric vehicle.

Also, the second rotor holding member 80 of the electric vehicle drive device 10 includes the second pin 83 arranged at the position spanning over the second concave portion 81a provided to the second outer member 81 and the second hole 82a provided to the second inner member 82 and overlapped with the second concave portion 81a.

Thereby, as compared to a configuration where the second outer member 81 and the second inner member 82 are fixed only by the press-fitting, the torque is more easily transmitted between the second outer member 81 and the second inner member 82. Also, since the second concave portion 81a is located at the radially outer side with respect to the second hole 82a, the second pin 83 is prevented from separating due to the centrifugal force.

Also, the second rotor holding member 80 of the electric vehicle drive device 10 includes the second positioning ring 84 fitted to the outer peripheral surface of the second outer member 81 at the position overlapped with the second inner member 82 in the radial direction of the second motor 12 and being in contact with the second rotor core 123.

Thereby, the second rotor core 123 is positioned by the second positioning ring 84. Also, the rigidity of the second outer member 81 radially overlapped with the second inner member 82 is relatively high. For this reason, the second positioning ring 84 is arranged at the position radially overlapped with the second inner member 82, so that it is possible to easily increase the press-fitting force when press-fitting the second positioning ring 84 to the second outer member 81. Accordingly, the separation of the second positioning ring 84 is suppressed.

Also, the electric vehicle drive device 10 includes the case G1, the first motor 11, the first rotation angle detector 91, the first signal line 93, the second motor 12, the second rotation angle detector 92, the second signal line 94, and the transmission mechanism 13. The case G1 is a tube-shaped member having the partition wall G11 provided to an inside thereof. The first motor 11 includes the first rotor core 113 capable of rotating about the rotation axis R and the first member to be detected 115 configured to rotate together with the first rotor core 113. The first rotation angle detector 91 is coupled to the partition wall G11 and faces the first member to be detected 115. The first signal line 93 is connected to the first rotation angle detector 91. The second motor 12 includes the second rotor core 123 capable of rotating about the rotation axis R and the second member to be detected 125 configured to rotate together with the second rotor core 123, and is arranged at the opposite side to the first motor 11 with the partition wall G11 being interposed therebetween. The second rotation angle detector 92 is coupled to the partition wall G11 and faces the second member to be detected 125. The second signal line 94 is connected to the second rotation angle detector 92. The transmission mechanism 13 is coupled to the first motor 11 and the second motor 12 and can switch the deceleration ratio. When seen from the axial direction, the first line L1 passing the root 931 of the first signal line 93 on the first rotation angle detector 91-side and the rotation axis R is overlapped with the second line L2 passing the root 941 of the second signal line 94 on the second rotation angle detector 92-side and the rotation axis R.

Thereby, since the first rotation angle detector 91 is fixed to one side of the partition wall G11 and the second rotation angle detector 92 is fixed to the other side of the partition wall G11, the distance from the first rotation angle detector 91 to the second rotation angle detector 92 is likely to be shortened. Then, since the first signal line 93 and the second signal line 94 are taken out in the same direction, the lengths of the first signal line 93 and the second signal line 94 are likely to be shortened. For this reason, the noise that is to occur in the outputs of the first signal line 93 and the second signal line 94 is reduced. Accordingly, the electric vehicle drive device 10 has the transmission mechanism 13 and can reduce the noise that is to occur in the output of the rotation angle detector.

Also, in the electric vehicle drive device 10, the position of the second rotation angle detector 92 is circumferentially offset with respect to the positon of the first rotation angle detector 91.

Thereby, even when the first rotation angle detector 91 and the second rotation angle detector 92 are the same device, the position of the fastening member 920 for fixing the second rotation angle detector 92 to the partition wall G11 is offset with respect to the position of the fastening member 910 for fixing the first rotation angle detector 91 to the partition wall G11. For this reason, the first rotation angle detector 91 and the second rotation angle detector 92 can be easily fixed to the partition wall G11. Also, since the same device can be used for the first rotation angle detector 91 and the second rotation angle detector 92, it is possible to save the cost upon the mass production.

Also, the transmission mechanism 13 of the electric vehicle drive device 10 includes the sun gear shaft 14 coupled to the first motor 11, the first sun gear 21 configured to rotate together with the sun gear shaft 14, the first pinion gear 22 to mesh with the first sun gear 21, the first carrier 23 configured to hold the first pinion gear 22 so that the first pinion gear 22 can rotate on its own axis and the first pinion gear 22 can revolve around the first sun gear 21, and the clutch device 60 configured to restrain the rotation of the first carrier 23. The clutch device 60 includes the inner ring 61 coupled to the first carrier 23, the outer ring 62 coupled to the partition wall G11, and the plurality of flange parts 69 protruding radially outward from the outer ring 62 and facing the partition wall G11. The plurality of flange parts 69 is unevenly arranged at the circumferential part. At least one of the first rotation angle detector 91 and the second rotation angle detector 92 is arranged between the flange part 691 of one circumferential end and the flange part 692 of the other circumferential end at the opposite side to the side at which the flange parts 69 are unevenly arranged.

Thereby, the outer ring 62 is fixed to the partition wall G11 by the plurality of flange parts 69. Also, as compared to a configuration where the flange parts 69 are arranged at equal intervals over the entire circumference, the position of at least one of the first rotation angle detector 91 and the second rotation angle detector 92 is likely to be located at the radially inner side. Thereby, at least one of the first rotation angle detector 91 and the second rotation angle detector 92 can be made small. Accordingly, a weight of the electric vehicle drive device 10 is saved.

### (Modified Embodiments)

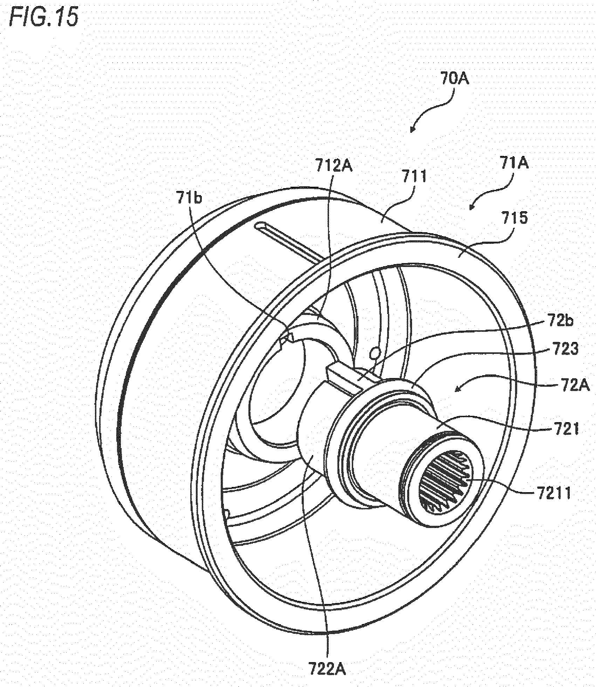

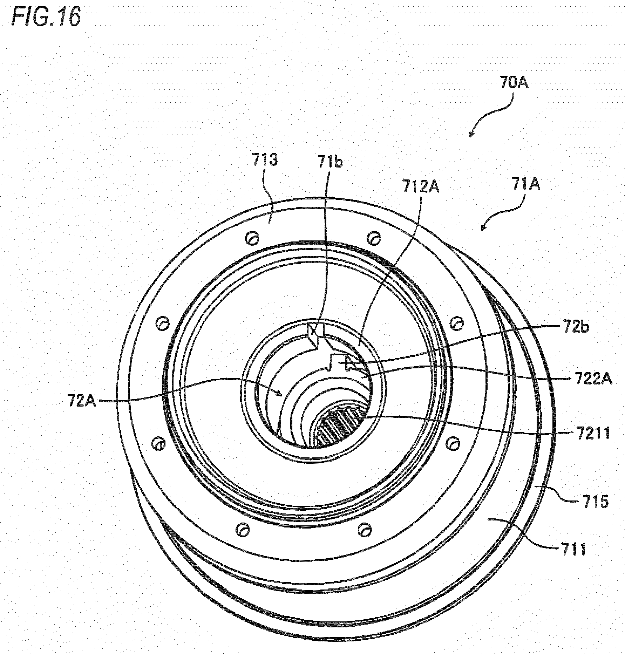

FIG. 15 is a perspective view of a first rotor holding member in accordance with a modified embodiment, when seen from one side. FIG. 16 is a perspective view of the first rotor holding member in accordance with the modified embodiment, when seen from the other side. As shown in FIG. 15, the electric vehicle drive device 10 of the modified embodiment includes a first rotor holding member 70A different from the first rotor holding member 70. As shown in FIGS. 15 and 16, the first rotor holding member 70A includes a first outer member 71A and a first inner member 72A. In the meantime, the same constitutional elements described in the embodiment are denoted with the same reference numerals, and the overlapping descriptions thereof are omitted.

The first outer member 71A is a member formed of the first metal. As shown in FIGS. 15 and 16, the first outer member 71A has an inner pipe part 712A. The inner pipe part 712A is a tube-shaped member, and is in contact with an outer peripheral surface of the first inner member 72A. The inner pipe part 712A is provided with a first concave portion 71b. The first concave portion 71b is a rectangular recess along the axial direction, for example.

The first inner member 72A is a member formed of the second metal. As shown in FIGS. 15 and 16, the first inner member 72A has a large-pipe part 722A. The large-pipe part 722A is a tube-shaped member, and is in contact with an inner peripheral surface of the inner pipe part 712A. The large-pipe part 722A is provided with a first convex portion 72b. The first convex portion 72b is a rectangular projection along the axial direction, for example.

The first concave portion 71b and the first convex portion 72b are members for easily transmitting the torque between the first outer member 71A and the first inner member 72A. The first convex portion 72b is fitted to the first concave portion 71a. Thereby, the torque is transmitted by way of the first concave portion 71b and the first convex portion 72b between the first outer member 71A and the first inner member 72A. At this time, the shear force is generated at the first concave portion 71b and the first convex portion 72b. The first concave portion 71b and the first convex portion 72b are provided, so that the torque can be more easily transmitted between the first outer member 71A and the first inner member 72A, as compared to a configuration where the first outer member 71A and the first inner member 72A arc fixed only by the press-fitting.

In the meantime, the structure having the first concave portion 71b and the first convex portion 72b may be applied to the second rotor holding member 80, too. That is, the second outer member 81 of the second rotor holding member 80 may have a second concave portion corresponding to the first concave portion 71b, and the second inner member 82 may have a second convex portion corresponding to the first 10 convex portion 72b.

### Description of Reference Numerals

- 10:: electric vehicle drive device
- 11:: first motor
- 111:: first stator core
- 113:: first rotor core
- 115:: first member to be detected
- 12:: second motor
- 121:: second stator core
- 123:: second rotor core
- 125:: second member to be detected
- 13:: transmission mechanism
- 14:: sun gear shaft
- 21:: first sun gear
- 22:: first pinion gear
- 23:: first carrier
- 60:: clutch device
- 61:: inner ring
- 62:: outer ring
- 69, 691, 692:: flange part
- 91:: first rotation angle detector
- 92:: second rotation angle detector
- 93:: first signal line
- 931:: root
- 94:: second signal line
- 941:: root
- G, G1, G2, G3:: case
- G11:: partition wall
- L1:: first line
- L2:: second line

## Claims

1. An electric vehicle drive device (10) comprising:
a tube-shaped case (G) including a partition wall (G11) provided to an inside thereof;
a first motor (11) including a first rotor core (113) capable of rotating about a rotation axis (R) and a first member to be detected (115) configured to rotate together with the first rotor core (113);
a first rotation angle detector (91) coupled to the partition wall (G11) and facing the first member to be detected (115);
a first signal line (93) connected to the first rotation angle detector (91);
a second motor (12) including a second rotor core (123) capable of rotating about the rotation axis (R) and a second member to be detected (125) configured to rotate together with the second rotor core (123), the second motor (12) arranged at an opposite side to the first motor (11) with the partition wall (G11) being interposed between the first motor (11) and the second motor (12);
a second rotation angle detector (92) coupled to the partition wall (G11) and facing the second member to be detected (125);
a second signal line (94) connected to the second rotation angle detector (92); and
a transmission mechanism (13) coupled to the first motor (11) and the second motor (12) and capable of switching a deceleration ratio, **characterized in that**
when seen from a direction of the rotation axis (R), a first line (L1) passing a root (931) of the first signal line (93) on a side of the first rotation angle detector (91) and the rotation axis (R) is overlapped with a second line (L2) passing a root (941) of the second signal line (94) on a side of the second rotation angle detector (92) and the rotation axis (R).

2. The electric vehicle drive device (10) according to claim 1,
wherein in a circumferential direction of the first motor (11), a position of the second rotation angle detector (92) is offset with respect to a position of the first rotation angle detector (91).

3. The electric vehicle drive device (10) according to claim 1 or 2,
wherein the transmission mechanism (13) comprises:
a sun gear shaft (14) coupled to the first motor (11);
a first sun gear (21) configured to rotate together with the sun gear shaft (14);
a first pinion gear (22) configured to mesh with the first sun gear (21);
a first carrier (23) configured to hold the first pinion gear (22) so that the first pinion gear (22) can rotate on its own axis and the first pinion gear (22) can revolve around the first sun gear (21); and
a clutch device (60) capable of restraining rotation of the first carrier (23),
wherein the clutch device (60) comprises:
an inner ring (61) coupled to the first carrier (23);
an outer ring (62) coupled to the partition wall (G11); and
a plurality of flange parts (69) protruding from the outer ring (62) in a radial direction of the first motor (11) and facing the partition wall (G11),
wherein the plurality of flange parts (69) are unevenly arranged at a part, which is a circumferential part of the first motor (11), between one circumferential end and the other circumferential end, and
wherein at least one of the first rotation angle detector (91) and the second rotation angle detector (92) is arranged between the flange part (691) of the one circumferential end and the flange part (692) of the other circumferential end at an opposite side to a side at which the flange parts (69) are unevenly arranged.

4. The electric vehicle drive device (10) according to any one of claims 1 to 3,
wherein the first rotation angle detector (91) has a band shape along a circumferential direction of the first motor (11) and is arranged so that a second surface, which is opposite to a first surface facing the first member to be detected (115), is in contact with the partition wall (G11), and
wherein the second rotation angle detector (92) has a band shape along a circumferential direction of the second motor (12) and is arranged so that a second surface, which is opposite to a first surface facing the second member to be detected (125), is in contact with the partition wall (G11).

5. The electric vehicle drive device (10) according to claim 4,
wherein the first signal line (93) is connected to an outer peripheral surface of the first rotation angle detector (91), and
wherein the second signal line (94) is connected to an outer peripheral surface of the second rotation angle detector (92).

6. The electric vehicle drive device (10) according to claim 5,
wherein a connection position of the first signal line (93) is offset in a clockwise direction from a circumferential center of the outer peripheral surface of the first rotation angle detector (91), and
wherein a connection position of the second signal line (94) is offset in the clockwise direction from a circumferential center of the outer peripheral surface of the second rotation angle detector (92).

7. The electric vehicle drive device (10) according to claim 6,
wherein the first signal line (93) is connected to one circumferential end of the outer peripheral surface of the first rotation angle detector (91), and
wherein the second signal line (94) is connected to one circumferential end of the outer peripheral surface of the second rotation angle detector (92).

## Patentansprüche

1. Antriebsvorrichtung (10) für Elektrofahrzeug, die umfasst:
ein röhrenförmiges Gehäuse (G), das eine Trennwand (G11) enthält, die sich an einer Innenseite desselben befindet;
einen ersten Motor (11), der ein erstes Läuferblech (113), das sich um eine Drehachse (R) drehen kann, und ein erstes zu erfassendes Element (115) enthält, das so eingerichtet ist, dass es sich zusammen mit dem ersten Läuferblech (113) dreht;
einen ersten Drehwinkel-Detektor (91), der mit der Trennwand (G11) gekoppelt ist und dem ersten zu erfassenden Element (115) zugewandt ist;
eine erste Signalleitung (93), die mit dem ersten Drehwinkel-Detektor (91) verbunden ist;
einen zweiten Motor (12), der ein zweites Läuferblech (123), das sich um die Drehachse (R) drehen kann, sowie ein zweites zu erfassendes Element (125) enthält, das so eingerichtet ist, dass es sich zusammen mit dem zweiten Läuferblech (123) dreht, wobei der zweite Motor (12) an einer dem ersten Motor (11) gegenüberliegenden Seite angeordnet ist, und die Trennwand (G11) zwischen dem ersten Motor (11) und dem zweiten Motor (12) angeordnet ist;
einen zweiten Drehwinkel-Detektor (92), der mit der Trennwand (G11) gekoppelt ist und dem zweiten zu erfassenden Element (125) zugewandt ist;
eine zweite Signalleitung (94), die mit dem zweiten Drehwinkeldetektor (92) verbunden ist; und
einen Übertragungsmechanismus (13), der mit dem ersten Motor (11) und dem zweiten Motor (12) gekoppelt ist und in der Lage ist, ein Verlangsamungs-Verhältnis umzuschalten, **dadurch gekennzeichnet, dass**
eine erste Linie (L1), die einen Anschluss (931) der ersten Signalleitung (93) an einer Seite des ersten Drehwinkel-Detektors (91) und die Drehachse (R) passiert, in einer Richtung der Drehachse (R) gesehen, sich mit einer zweiten Linie (L2) überlappt , die einen Anschluss (941) der zweiten Signalleitung (94) an einer Seite des zweiten Drehwinkel-Detektors (92) und die Drehachse (R) passiert.

2. Antriebsvorrichtung (10) für Elektrofahrzeug nach Anspruch 1,
wobei eine Position des zweiten Drehwinkel-Detektors (92) in Bezug auf eine Position des ersten Drehwinkeldetektors (91) in einer Umfangsrichtung des ersten Motors (11) versetzt ist.

3. Antriebsvorrichtung (10) für Elektrofahrzeug nach Anspruch 1 oder 2,
wobei der Übertragungsmechanismus (13) umfasst:
eine Sonnenrad-Welle (14), die mit dem ersten Motor (11) gekoppelt ist;
ein erstes Sonnenrad (21), das so eingerichtet ist, dass es sich zusammen mit der Sonnenrad-Welle (14) dreht;
ein erstes Ritzel (22), das so eingerichtet ist, dass es mit dem ersten Sonnenrad (21) kämmt;
einen ersten Träger (23), der so eingerichtet ist, dass er das erste Ritzel (22) so hält, dass sich das erste Ritzel (22) auf seiner eigenen Achse drehen kann und das erste Ritzel (22) um das erste Sonnenrad (21) kreisen kann; sowie
eine Kupplungsvorrichtung (60), die in der Lage ist, Drehung des ersten Trägers (23) einzuschränken,
wobei die Kupplungsvorrichtung (60) umfasst:
einen Innenring (61), der mit dem ersten Träger (23) gekoppelt ist;
einen Außenring (62), der mit der Trennwand (G11) gekoppelt ist; sowie
eine Vielzahl von Flanschteilen (69), die von dem Außenring (62) in einer radialen Richtung des ersten Motors (11) vorstehen und der Trennwand (G11) zugewandt sind,
wobei die Vielzahl von Flanschteilen (69) an einem Teil, der ein Umfangsteil des ersten Motors (11) ist, ungleichmäßig zwischen einem Umfangsende und dem anderen Umfangsende angeordnet sind, und
der erste Drehwinkel-Detektor (91) oder/und der zweite Drehwinkel-Detektor (92) zwischen dem Flanschteil (691) des einen Umfangsendes und dem Flanschteil (692) des anderen Umfangsendes an einer Seite angeordnet ist/sind, die einer Seite gegenüberliegt, an der die Flanschteile (69) ungleichmäßig angeordnet sind.

4. Antriebsvorrichtung (10) für Elektrofahrzeug nach einem der Ansprüche 1 bis 3,
wobei der erste Drehwinkel-Detektor (91) eine Ringform in einer Umfangsrichtung des ersten Motors (11) hat und so angeordnet ist, dass eine zweite Fläche, die einer ersten Fläche gegenüberliegt, die dem ersten zu erfassenden Element (115) zugewandt ist, in Kontakt mit der Trennwand (G11) ist, und
der zweite Drehwinkel-Detektor (92) eine Ringform in einer Umfangsrichtung des zweiten Motors (12) hat und so angeordnet ist, dass eine zweite Fläche, die einer ersten Fläche gegenüberliegt, die dem zweiten zu erfassenden Element (125) zugewandt ist, in Kontakt mit der Trennwand (G11) ist.

5. Antriebsvorrichtung (10) für Elektrofahrzeug nach Anspruch 4,
wobei die erste Signalleitung (93) mit einer Außenumfangsfläche des ersten Drehwinkel-Detektors (91) verbunden ist, und
die zweite Signalleitung (94) mit einer Außenumfangsfläche des zweiten Drehwinkel-Detektors (92) verbunden ist.

6. Antriebsvorrichtung (10) für Elektrofahrzeug nach Anspruch 5,
wobei eine Verbindungsposition der ersten Signalleitung (93 gegenüber einem Umfangs-Mittelpunkt der Außenumfangsfläche des ersten Drehwinkel-Detektors (91)) in einer Richtung im Uhrzeigersinn versetzt ist, und
eine Verbindungsposition der zweiten Signalleitung (94) gegenüber einem Umfangs-Mittelpunkt der Außenumfangsfläche des zweiten Drehwinkel-Detektors (92) in der Richtung im Uhrzeigersinn versetzt ist.

7. Antriebsvorrichtung (10) für Elektrofahrzeug nach Anspruch 6,
wobei die erste Signalleitung (93) mit einem Umfangsende der Außenumfangsfläche des ersten Drehwinkel-Detektors (91) verbunden ist, und
die zweite Signalleitung (94) mit einem Umfangsende der Außenumfangsfläche des zweiten Drehwinkel-Detektors (92) verbunden ist.

## Revendications

1. Dispositif d'entraînement de véhicule électrique (10) comprenant :
un boîtier en forme de tube (G) comprenant une paroi de séparation (G11) disposée dans un intérieur de celui-ci ;
un premier moteur (11) comprenant un premier noyau de rotor (113) capable de tourner autour d'un axe de rotation (R) et un premier élément à détecter (115) configuré pour tourner conjointement avec le premier noyau de rotor (113) ;
un premier détecteur d'angle de rotation (91) couplé à la paroi de séparation (G11) et faisant face au premier élément à détecter (115) ;
une première ligne de signal (93) connectée au premier détecteur d'angle de rotation (91) ;
un second moteur (12) comprenant un second noyau de rotor (123) capable de tourner autour de l'axe de rotation (R) et un second élément à détecter (125) configuré pour tourner conjointement avec le second noyau de rotor (123), le second moteur (12) étant disposé sur un côté opposé au premier moteur (11), la paroi de séparation (G11) étant interposée entre le premier moteur (11) et le second moteur (12) ;
un second détecteur d'angle de rotation (92) couplé à la paroi de séparation (G11) et faisant face au second élément à détecter (125) ;
une seconde ligne de signal (94) connectée au second détecteur d'angle de rotation (92) ; et
un mécanisme de transmission (13) couplé au premier moteur (11) et au second moteur (12) et capable de commuter un rapport de décélération, **caractérisé en ce que**
lorsqu'observée depuis une direction de l'axe de rotation (R), une première ligne (L1) passant par une racine (931) de la première ligne de signal (93) sur un côté du premier détecteur d'angle de rotation (91) et de l'axe de rotation (R) chevauche une seconde ligne (L2) passant par une racine (941) de la seconde ligne de signal (94) sur un côté du second détecteur d'angle de rotation (92) et de l'axe de rotation (R).

2. Dispositif d'entraînement de véhicule électrique (10) selon la revendication 1, dans lequel, dans une direction circonférentielle du premier moteur (11), une position du second détecteur d'angle de rotation (92) est décalée par rapport à une position du premier détecteur d'angle de rotation (91).

3. Dispositif d'entraînement de véhicule électrique (10) selon la revendication 1 ou 2, dans lequel le mécanisme de transmission (13) comprend :
un arbre d'engrenage planétaire (14) couplé au premier moteur (11) ;
un premier engrenage planétaire (21) configuré pour tourner conjointement avec l'arbre d'engrenage planétaire (14) ;
un premier engrenage à pignons (22) configuré pour s'engrener avec le premier engrenage planétaire (21) ;
un premier support (23) configuré pour maintenir le premier engrenage à pignons (22) de sorte que le premier engrenage à pignons (22) peut tourner sur son propre axe et le premier engrenage à pignons (22) peut tourner autour du premier engrenage planétaire (21) ; et
un dispositif d'embrayage (60) capable de restreindre une rotation du premier support (23),
dans lequel le dispositif d'embrayage (60) comprend :
une bague intérieure (61) couplée au premier support (23) ;
une bague extérieure (62) couplée à la paroi de séparation (G11) ; et
une pluralité de parties de bride (69) faisant saillie depuis la bague extérieure (62) dans une direction radiale du premier moteur (11) et faisant face à la paroi de séparation (G11),
dans lequel la pluralité de parties de bride (69) sont disposées de manière irrégulière au niveau d'une partie, qui est une partie circonférentielle du premier moteur (11), entre une première extrémité circonférentielle et l'autre extrémité circonférentielle, et dans lequel au moins l'un parmi le premier détecteur d'angle de rotation (91) et le second détecteur d'angle de rotation (92) est disposé entre la partie de bride (691) de la première extrémité circonférentielle et la partie de bride (692) de l'autre extrémité circonférentielle sur une côté opposé à un côté sur lequel les parties de bride (69) sont disposées de manière irrégulière.

4. Dispositif d'entraînement de véhicule électrique (10) selon l'une quelconque des revendications 1 à 3,
dans lequel le premier détecteur d'angle de rotation (91) a une forme de bande le long d'une direction circonférentielle du premier moteur (11) et est agencé de sorte qu'une seconde surface, qui est opposée à une première surface faisant face au premier élément à détecter (115), est en contact avec la paroi de séparation (G11), et
dans lequel le second détecteur d'angle de rotation (92) a une forme de bande le long d'une direction circonférentielle du second moteur (12) et est agencé de sorte qu'une seconde surface, qui est opposée à une première surface faisant face au second élément à détecter (125), est en contact avec la paroi de séparation (G11).

5. Dispositif d'entraînement de véhicule électrique (10) selon la revendication 4,
dans lequel la première ligne de signal (93) est connectée à une surface périphérique extérieure du premier détecteur d'angle de rotation (91), et
dans lequel la seconde ligne de signal (94) est connectée à une surface périphérique extérieure du second détecteur d'angle de rotation (92).

6. Dispositif d'entraînement de véhicule électrique (10) selon la revendication 5,
dans lequel une position de connexion de la première ligne de signal (93) est décalée dans le sens des aiguilles d'une montre par rapport à un centre circonférentiel de la surface périphérique extérieure du premier détecteur d'angle de rotation (91), et
dans lequel une position de connexion de la seconde ligne de signal (94) est décalée dans le sens des aiguilles d'une montre par rapport à un centre circonférentiel de la surface périphérique extérieure du second détecteur d'angle de rotation (92).

7. Dispositif d'entraînement de véhicule électrique (10) selon la revendication 6,
dans lequel la première ligne de signal (93) est connectée à une extrémité circonférentielle de la surface périphérique extérieure du premier détecteur d'angle de rotation (91), et
dans lequel la seconde ligne de signal (94) est connectée à une extrémité circonférentielle de la surface périphérique extérieure du second détecteur d'angle de rotation (92).
